# EUROPÄISCHE PATENTANMELDUNG

(11) **EP 4 657 071 A1**
(43) Veröffentlichungstag der Anmeldung: **03.12.2025**
(21) Anmeldenummer: 25178911.1
(22) Anmeldetag: 27.05.2025
(51) Int. Cl.: G01N 35/00, G01N 35/04

(54) **NESTENTNAHMEVORRICHTUNG, NESTHANDHABUNGSSYSTEM UND VERFAHREN ZUM HANDHABEN EINES NESTS MIT EINEM TUB**

(30) Priorität: 31.05.2024 DE 102024115236
(71) Anmelder: Körber Pharma Inspection GmbH, 85570 Markt Schwaben (DE)
(72) Erfinder: Bauer, Zeno, 85570 Markt Schwaben (DE); Mayr, Andreas, 85570 Markt Schwaben (DE); Haberstetter, Martin, 85570 Markt Schwaben (DE); Grindinger, Herbert, 85570 Markt Schwaben (DE)
(74) Vertreter: Müller Schupfner & Partner Patent- und Rechtsanwaltspartnerschaft mbB (Muc)

(57) **Zusammenfassung**

Es wird eine Nestentnahmevorrichtung (1) zum Entnehmen eines Nests (2) aus einem Tub (3) bereitgestellt. Die Nestentnahmevorrichtung (1) umfasst einen Zuförderabschnitt (10), der dazu ausgestaltet ist, zumindest ein Tub (3), in welchem ein Nest (2) aufgenommen ist, in einer Förderrichtung (R1) zu fördern, einen Entnahmeabschnitt (20), der dazu ausgestaltet ist, das zumindest eine Tub (3) in einer Entnahmeposition zu positionieren, eine Entnahmevorrichtung (30), die dazu ausgestaltet ist, das Nest (2) aus dem Tub (3), welches sich in der Entnahmeposition befindet, zu entnehmen, und einen Abförderabschnitt (40), der dazu ausgestaltet ist, das Tub (3) abzutransportieren. Der Entnahmeabschnitt (20) umfasst zumindest einen ersten Stopper (21), um das Tub (3) in der Entnahmeposition zu positionieren. Ferner wird ein Handhabungssystem (100) zum Handhaben eines Tubs (3) und eines Nestes (2) und ein Verfahren zum Handhaben eines Nests (2) und eines Tubs (3) bereitgestellt.

## Beschreibung

Die vorliegende Erfindung betrifft eine Nestentnahmevorrichtung zum Entnehmen eines Nests aus einem Tub, ein Nesthandhabungssystem zum Handhaben eines Tubs und eines Nests sowie ein Verfahren zum Handhaben eines Nest und eines Tubs.

Um pharmazeutische Produkte, insbesondere Venülen, Spritzen, Cartridges (Zylinderampullen) oder Behälter, zu transportieren sind im Stand der Technik sogenannte Tubs bekannt, in denen Nester aufgenommen und gehalten werden können. Die Tubs haben dabei eine wannenartige Ausgestaltung, sodass Nester so darin aufgenommen werden können, dass in den Nestern gehaltene pharmazeutische Produkte sicher gehalten sind. Die Nester haben vorzugsweise eine gitterartige Struktur, sodass jedes Produkt jeweils eine Halterung hat, und verhindert ist, dass die Produkte miteinander in Berührung kommen.

Während eines Herstellungsprozesses von pharmazeutischen Produkten kann es notwendig sein, ein Nest aus einem Tub zu entnehmen. Ferner kann es notwendig sein, die pharmazeutischen Produkte aus den Nestern zu entnehmen. Aufgrund der Komplexität der Ausgestaltung eines Tubs und eines Nests kann eine solche Handhabung derselben nur sehr langsam realisiert werden. Insbesondere aufgrund der Fragilität und sonstiger Eigenschaft der pharmazeutischen Produkte wird im Stand der Technik die Handhabung oft manuell oder nur langsam automatisiert durchgeführt.

Daher ist es eine Aufgabe der vorliegenden Erfindung, eine Vorrichtung und ein Verfahren bereitzustellen, mit der die Handhabung von Nestern und Tubs beschleunigt werden kann.

Dieses Problem wird mit einer Nestentnahmevorrichtung mit den Merkmalen des Anspruchs 1, mit einem Nesthandhabungssystem mit den Merkmalen des Anspruchs 13 und mit einem Verfahren zum Handhaben eines Nests und eines Tubs mit den Merkmalen des Anspruchs 15 gelöst.

Gemäß einem Aspekt der vorliegenden Erfindung wird eine Nestentnahmevorrichtung zum Entnehmen eines Nests aus einem Tub bereitgestellt. Die Nestentnahmevorrichtung kann einen Zuförderabschnitt umfassen, der dazu ausgestaltet ist, zumindest ein Tub, in welchem ein Nest aufgenommen ist, in einer Förderrichtung zu fördern. Die Nestentnahmevorrichtung kann einen Entnahmeabschnitt umfassen, der dazu ausgestaltet ist, das zumindest eine Tub in einer Entnahmeposition zu positionieren. Die Nestentnahmevorrichtung kann eine Entnahmevorrichtung umfassen, die dazu ausgestaltet ist, das Nest aus dem Tub, welches sich in der Entnahmeposition befindet, zu entnehmen. Die Nestentnahmevorrichtung kann einen Abförderabschnitt umfassen, der dazu ausgestaltet ist, das Tub abzutransportieren. Der Entnahmeabschnitt kann zumindest einen ersten Stopper umfassen, um das Tub in der Entnahmeposition zu positionieren.

Gegenüber dem bekannten Stand der Technik liefert die vorliegende Erfindung den Vorteil, dass ein erhöhter Durchsatz von Nestern erreicht werden kann. Mit anderen Worten kann die Nestentnahmevorrichtung getaktet betrieben werden, sodass aus den in der Entnahmeposition positionierten Tubs die Nester schnell entnommen werden können. Mit anderen Worten muss die Entnahmevorrichtung sich nicht einer Bewegung des Tubs anpassen, um das Nest daraus zu entnehmen, sondern kann das Nest aus einem stillstehenden Tub (d. h. ein in der Entnahmeposition befindliches Tub) entnehmen. Dadurch kann die Entnahmevorrichtung schnell arbeiten und das aus dem Tub entnommene Nest in eine Ablageposition ablegen. Die Ablageposition der Nester kann beispielsweise eine weitere Transporteinrichtung sein, in der drei Nester parallel zueinander in einer Förderrichtung oder auch erste Richtung transportiert werden. Praktisch kann die Entnahmevorrichtung also ein Nest aus einem Tub, welches sich in der Entnahmeposition befindet, entnehmen und in die erste Ablageposition bringen. Ist das Nest in der ersten Ablageposition angeordnet, kann bereits ein weiteres Tub in die Entnahmeposition gebracht worden sein, sodass die Entnahmevorrichtung direkt ein weiteres Nest aus dem Tub entnehmen kann und an einer zweiten Ablageposition ablegen kann. Während dieser Aktion ist ein weiteres Tub bereits in der Entnahmeposition angeordnet, sodass die Entnahmevorrichtung nach Ablage des zweiten Nests direkt das dritte Nest aus einem Tub, welches sich in der Entnahmeposition befindet, entnehmen kann und an die dritte Ablageposition ablegen kann. Hierbei ist es vorteilhaft, dass sich die erste Ablageposition, die zweite Ablageposition und die dritte Ablageposition nebeneinander befinden. Vorzugsweise befinden sich die Ablagepositionen parallel entlang des Zuförderabschnitts. Der Stopper kann hierbei dafür sorgen, dass ein neues Tub mit Nest in der korrekten Position bereitsteht, wenn die Entnahmevorrichtung ein vorher gehandhabtes Nest abgelegt hat. Dadurch kann der Durchsatz erheblich gesteigert werden, da die Entnahmevorrichtung die Nester aus stillstehenden Tubs entnehmen kann und nicht parallel zu der Förderrichtung der Tubs bewegt werden muss. Zusammengefasst kann also die Menge an gehandhabten Nestern (und damit an gehandhabten pharmazeutischen Produkten) gesteigert werden, ohne dass Gefahr besteht, dass es zu Beschädigungen oder zu Fehlern im Betrieb kommt.

Die Nestentnahmevorrichtung kann eine mechanisch, physische Vorrichtung sein, die dazu ausgestaltet ist, ein Nest aus einem Tub zu entnehmen. Vorzugsweise kann die Nestentnahmevorrichtung dazu ausgestaltet sein, die Nester auf einem Nesttransportmittel bereitzustellen. Das Nesttransportmittel kann ein Bandförderer sein, der zumindest drei Nester nebeneinander in einer Bandförderrichtung transportieren kann. Die Bandförderrichtung kann dabei im Wesentlichen orthogonal zu der Förderrichtung sein. Das Nesttransportmittel kann unmittelbar angrenzend zu der Entnahmevorrichtung angeordnet sein. Dadurch kann sichergestellt sein, dass die Nester aus den Tubs zufriedenstellend in die Nesttransportvorrichtung übergeben werden können. Vorzugsweise verläuft die Nesttransportförderrichtung im Wesentlichen orthogonal zu der Förderrichtung. Damit kann eine Nestentnahmevorrichtung bereitgestellt sein, die einen deutlich erhöhten Durchsatz von gehandhabten Gefäßen aufweisen kann. Beispielsweise kann die Nestentnahmevorrichtung dazu ausgestaltet sein, mehr als 600 pharmazeutische Produkte pro Minute zu handhaben. Vorzugsweise kann die Nestentnahmevorrichtung ungefähr 1000 pharmazeutischen Produkten pro Minute handhaben. Die pharmazeutischen Produkte können Gefäße, Spritzen, Spritzenteile, Venülen, Spritzen, Cartridges (Zylinderampullen) oder dergleichen sein.

Der Zuführabschnitt kann eine Einrichtung sein, die dazu ausgestaltet ist, ein Tub zu bewegen. Vorzugsweise kann der Zuführabschnitt eine Vielzahl von Tubs bewegen. Das zu bewegende Tub kann hierbei kraftschlüssig und/oder formschlüssig mit dem Zuförderabschnitt zusammenwirken. Dadurch kann eine definierte Bewegung des Tubs bereitgestellt sein. Die Entnahmevorrichtung kann eine Vorrichtung sein, die ein Nest aus einem Tub entnehmen kann. Das Tub kann während der Entnahme des Nests durch die Entnahmevorrichtung still stehen (d.h. nicht gefördert werden). Dadurch kann eine besonders schnelle Entnahme realisiert sein. Vorzugsweise ist die Entnahmevorrichtung eine roboterartige Vorrichtung, die ein Nest mit allen in dem Nest gehaltenen Behältern handhaben kann. Vorzugsweise kann die Entnahmevorrichtung dazu ausgestaltet sein, ein Nest entgegen der Schwererichtung aus einem Tub hinaus zu heben. Die Entnahmevorrichtung kann eine Sauggreifvorrichtung sein, die das Nest durch Unterdruck halten und bewegen kann. Dazu kann die Entnahmevorrichtung eine Vielzahl von Saugnäpfen aufweisen, die mit einem Teil des Nests in Kontakt treten können, um dieses zu greifen und/oder zu halten. Ein Nest kann beispielsweise einen Kontaktabschnitt (beispielsweise einen umlaufenden Kragen) aufweisen, an welchem die Entnahmevorrichtung das Nest kontaktieren kann. Vorzugsweise weist die Entnahmevorrichtung acht Saugnäpfe auf. Dadurch kann ein Nest besonders gleichmäßig gehalten werden. Die Entnahmevorrichtung kann einen Bewegungsabschnitt und einen Greifabschnitt umfassen. Der Greifabschnitt kann die Greifvorrichtung umfassen. Die Greifvorrichtung kann ein pneumatischer oder mechanischer Greifer sein. Die Bewegungsvorrichtung kann als ein Deltaroboter ausgebildet sein. Dadurch kann die Entnahmevorrichtung ein Nest beliebig im Raum verlagern. Die Entnahmevorrichtung kann dazu ausgestaltet sein, ein Nest aus einem Tub zu entnehmen und das Nest dann einem Nesttransportsystem zuzuführen. Das Nesttransportsystem kann beispielsweise ein mehrkanaliger Nesttransport sein, der dazu ausgestaltet ist, mehrere Nester nebeneinander abzutransportieren. Mit anderen Worten kann durch die Entnahmevorrichtung das Nesta aus dem Tub entnommen werden und ohne Tub abtransportiert werden, so dass das Tub ohne Nest in der Entnahmeposition verbleibt. Das leere Tub kann anschließend aus der Entnahmeposition abtransportiert werden. Vorzugsweise umfasst die Greifvorrichtung ein Unterdruckverteilsystem, das durch eine Unterdruckpumpe mit Unterdruck beaufschlagbar ist. Vorzugsweise umfasst die Entnahmevorrichtung ausschließlich eine einzelne Unterdruckvorrichtung. Vorzugsweise ist die Greifvorrichtung rahmenartig ausgestaltet. Dadurch kann Gewicht eingespart werden und die Greifvorrichtung besser an das zu greifende Nest angepasst sein. Vorzugsweise umfasst die Greifvorrichtung der Entnahmevorrichtung einen Vorsprung. Der Vorsprung kann dazu ausgestaltet sein, die Entnahmevorrichtung und ein Nest so relativ zueinander zu positionieren, dass die Entnahmevorrichtung das Nest problemlos greifen kann. Der Vorsprung kann also als eine Zentrierhilfe ausgestaltet sein. Dadurch kann sichergestellt sein, dass die Entnahmevorrichtung das Nest an der Kontaktfläche kontaktiert und es zu keiner Leckage von Unterdruckluft kommt. Vorzugsweise weist der Vorsprung eine sich verjüngende Form auf. Vorzugsweise ist der Vorsprung in der Schwererichtung orientiert. Damit kann sichergestellt sein, dass die Greifvorrichtung das zu entnehmende Nest an den dafür geeigneten Kontaktstellen kontaktiert. Damit ist eine Fehlkontaktierung zwischen Nest und Entnahmevorrichtung vermieden. Die Entnahmevorrichtung kann das gegriffene Nest dann an einer beliebigen Raumposition ablegen. Wie oben beschrieben legt die Entnahmevorrichtung das Nest vorzugsweise in eine dafür vorgesehene Aussparung eines weiteren Bandförderers ab. Der Abförderabschnitt kann dazu ausgestaltet sein, ein leeres Tub aus der Entnahmeposition abzuführen. Das Tub kann in derselben Richtung aus der Entnahmeposition abgefördert werden, wie es in die Entnahmeposition gelangt ist. Damit kann ein kontinuierlicher Betrieb erreicht werden, der einen höheren Durchsatz erlaubt. Die Entnahmeposition kann eine definierte Position sein, in der die Entnahmevorrichtung das Nest aus dem Tub entnehmen kann. Vorzugsweise ist die Entnahmeposition so gewählt, dass ein mittlerer Abstand zwischen der Entnahmeposition und aller Zielpositionen (d.h. der Ablagepositionen), an denen die Nester von der Entnahmevorrichtung abzulegen sind, minimiert ist. Damit kann die Effizienz des Gesamtsystems gesteigert sein. Die leeren Tubs können über den Abförderabschnitt dann aus der Nestentnahmevorrichtung abgeführt werden. Der Stopper kann beispielsweise als ein Anschlag ausgestaltet sein, der ein Tub mit einem zu handhabenden Nest in der Entnahmeposition fixiert (d.h. festhält). Mit anderen Worten kann der Stopper dazu ausgestaltet sein, eine Bewegung des Tubs in der Förderrichtung zu unterbrechen, sodass sich das Tub in der Entnahmeposition befindet. Der Stopper kann in den Verfahrweg des Tubs eingefahren werden und so ein Weitertransport des Tubs verhindern. Der Stopper kann an seinem Außenende (d. h. das Ende, welches mit dem Tub in Kontakt kommt), einen zylindrischen Abschnitt aufweisen. Damit können Beschädigungen des Tubs durch Kontakt mit dem Stopper vermieden werden. Der Stopper kann intermittierend betätigt werden, sodass das Tub nur solange gestoppt ist, bis die Entnahmevorrichtung das Nest aus dem Tub entnommen hat. Anschließend kann der Stopper dazu ausgestaltet sein, sich wieder einzufahren oder wegzuklappen, um den Weg für das Tub wieder frei zu machen. Dadurch können eine Vielzahl von Tubs nacheinander abgearbeitet werden, wobei genau jedes Tub nur solange durch den Stopper gestoppt wird, bis das Nest aus dem Tub durch die Entnahmevorrichtung entnommen ist. Dadurch kann der Durchsatz von in Nestern aufgenommenen Behältern wesentlich erhöht werden.

Vorzugsweise weist der Abförderabschnitt einen Pufferabschnitt auf, der dazu ausgestaltet ist, zumindest ein Tub zwischenzuspeichern. Mit anderen Worten kann der Pufferabschnitt dazu ausgestaltet sein, ein leeres Tub zwischenzuspeichern. Zwischenzuspeichern kann in diesem Zusammenhang bedeuten, dass die Weitergabe zumindest eines Tubs verzögert erfolgt. Dadurch können an einem stromabwärtigen Ende des Förderabschnitts leere Tubs in einer bestimmten Frequenz bereitgestellt werden. Beispielsweise kann es vorkommen, dass durch die beschleunigte Entnahme der Nester aus den Tubs mehr leere Tubs zur Verfügung gestellt werden (d. h. am Ende des Abförderabschnitts) als tatsächlich durch ein stromabwärts angeordnetes Element abgefertigt werden können. Dadurch ist es vorteilhaft, wenn ein Pufferabschnitt zwischengeschaltet ist, der Tubs entsprechend zwischenspeichern kann. Der Pufferabschnitt kann beispielsweise eine Vorrichtung sein, die Tubs von dem Abförderabschnitt entnehmen kann. Ferner kann ein Pufferabschnitt in einem Speicherabschnitt die entnommenen Tubs zwischenspeichern und an einem Zuführabschnitt dem Abförderabschnitt oder einem weiteren Element wieder direkt zuführen.

Vorzugsweise ist der Pufferabschnitt dazu ausgestaltet, zumindest ein Tub so zwischenzuspeichern, so dass andere Tubs den Pufferabschnitt passieren können. Mit anderen Worten kann der Pufferabschnitt durch ein parallel geschaltetes System realisiert sein, sodass der Abförderabschnitt trotz, dass der Pufferabschnitt Tubs zwischenspeichert, Tubs normal zu einem stromabwärtigen Ende des Abförderabschnitts abtransportieren kann. So kann der Pufferabschnitt beispielsweise ein parallel angeordnetes Transportsystem sein, dem Tubs zugeführt werden und dann zum Stillstand gebracht werden. Dadurch kann eine gewünschte Frequenz an einem stromabwärtigen Ende des Abförderabschnitts realisiert sein.

Vorzugsweise ist der Pufferabschnitt dazu ausgestaltet, das zumindest eine Tub, welches zwischengespeichert werden soll, entgegen der Schwererichtung anzuheben. Mit anderen Worten kann der Pufferabschnitt ein Tub von dem Abförderabschnitt anheben, sodass andere Tubs den Abförderabschnitt passieren können. Damit kann eine besonders platzsparende Vorrichtung bereitgestellt werden, da der Pufferabschnitt nicht neben dem Abförderabschnitt, sondern darüber, angeordnet sein kann. Der Pufferabschnitt kann dazu eine Greifvorrichtung aufweisen, die dazu ausgestaltet sein kann, ein Tub von dem Abförderabschnitt anzuheben. Eine solche Greifvorrichtung kann ferner dazu ausgestaltet sein, mehr als ein Tub zu halten. So ist beispielsweise denkbar, dass die Greifvorrichtung jeweils ein Tub anheben kann, während ein weiteres Tub bereits von der Greifvorrichtung gehalten wird. Dadurch kann der Pufferabschnitt individuell gesteuert werden, um eine Frequenz von Tubs an dem stromabwärtigen Ende des Abförderabschnitts zu erlangen. Der Pufferabschnitt kann beispielsweise als ein schienenartiges System ausgestaltet sein, in das Tubs eingeschoben werden können, die zwischengespeichert werden sollen. Somit kann ein Transportmittel des Abförderabschnitts genutzt werden, um die Tubs dem Pufferabschnitt zuzuführen. Hierbei kann das schienenartige System so lange auf Höhe des Abförderabschnitts gehalten werden, bis die gewünschte Anzahl an zwischenzuspeichernden Tubs eingeführt ist.

Anschließend kann das schienenartige System dann angehoben werden. Eine Entleerung des schienenartigen Systems kann in umgekehrter Reihenfolge erfolgen. Dadurch kann ein weitgehend passiver Pufferabschnitt bereitgestellt sein.

Vorzugsweise weist der Zuförderabschnitt einen ersten Elevator auf, der dazu ausgestaltet ist, das Tub in einer Vertikalförderrichtung zu fördern. Der erste Elevator kann also dazu ausgestaltet sein, zumindest ein Tub so zu bewegen, dass es eine vertikale Höhendistanz (d. h. entlang oder entgegen der Schwererichtung) überwinden kann. Der erste Elevator bietet ferner den Vorteil, dass Tubs, in denen Nester aufgenommen sind, von oberhalb oder unterhalb zugefördert werden können. Somit kann die Entnahmevorrichtung in ein dreidimensionales Maschinenlayout integriert werden. Ferner kann die Vorrichtung flexibler in bestehende Maschinenlayouts integriert werden.

Vorzugsweise weist der Abförderabschnitt einen zweiten Elevator auf, der dazu ausgestaltet ist, das Tub in einer Vertikalförderrichtung zu fördern. Der zweite Elevator kann identisch zu dem ersten Elevator ausgestaltet sein. Der zweite Elevator kann ein Tub mit oder ohne Nest in einer Vertikalrichtung (d. h. entlang oder entgegen der Schwererichtung) transportieren. Der zweite Elevator kann an einer stromabwärtigen Seite des Abförderabschnitts angeordnet sein. Zwischen dem zweiten Elevator und der Entnahmevorrichtung können weitere Elemente angeordnet sein. Durch den zweiten Elevator kann ein Tub (mit oder ohne Nest) wieder in eine gewünschte Höhenposition zurückgefördert werden, um beispielsweise von weiteren Handhabungsvorrichtungen gehandhabt zu werden.

Vorzugsweise weist der erste Elevator und/oder der zweite Elevator ein Paar aus zwei Bändern auf, die dazu ausgestaltet sind, zumindest ein Tub in der Vertikalförderrichtung zu fördern. Die Bänder können jeweils umlaufend angeordnet sein. Mit anderen Worten muss der erste Elevator und/oder der zweite Elevator nicht in einer vorwärts-rückwärts-Richtung bewegt werden, sondern kann umlaufend betrieben werden. Dies steigert den Durchsatz, sodass die gesamte Vorrichtung einen höheren Durchsatz erzielen kann. Die Bänder können so ausgestaltet sein, dass die Tubs formschlüssig und/oder kraftschlüssig mit den Bändern zusammenwirken. Beispielsweise können die Tubs Schultern aufweisen. Die Bänder können mit den Schultern so zusammenwirken, dass sie die Tubs an den Schultern kontaktieren. Dadurch kann auf einfache Art und Weise ein Tub von dem Elevator gegriffen, transportiert und wieder abgestellt werden.

Vorzugsweise ist das Paar von Bändern eines Elevators mittels Stegabschnitten miteinander verbunden. Mit anderen Worten kann jeder Elevator zumindest zwei Bänder aufweisen. Unabhängig davon, wie viele Bänder ein Elevator umfasst, kann das zumindest eine Band ein Kettengliederband oder ein Zahnriemen sein. Durch die Stegabschnitte, die vorzugsweise starr sind, kann der Gleichlauf zweier Bänder sichergestellt sein. Damit kann sichergestellt sein, dass ein Tub, welches von dem Elevator transportiert wird, nicht gekippt wird. Ferner kann durch die Stegabschnitte eine größere Auflagefläche für das Tub bereitgestellt werden. Ferner können die Tubs aus dem Elevator herausgeschoben oder in den Elevator eingeschoben werden. Dies kann beispielsweise mit einem Pusher zum Beispiel an einer oberen Tub-Überschubposition geschehen. Dadurch kann der Flächendruck auf das jeweilige Tub reduziert sein.

Vorzugsweise weist der erste Elevator und/oder der zweite Elevator jeweils zwei Paare von Bändern auf, die vorzugsweise gegenüberliegend angeordnet sind. Mit anderen Worten kann jeder Elevator vorzugsweise 4 umlaufende Bänder aufweisen. Dabei können ein paar von Bändern (d. h. zwei Bänder) durch eine gemeinsame Rolle umlaufend vorgesehen sein. Gegenüberliegend kann ein weiteres Paar von Bändern vorgesehen sein, sodass ein Elevator insgesamt vier Bänder umfasst. Die Bänder eines Paars von Bändern können die oben genannten Stegabschnitte aufweisen. Die Stegabschnitte der einzelnen Paare von Bändern können so angeordnet sein, dass sie gegenüberliegend verlaufen. Mit anderen Worten können die Bänder der Paare von Bändern so gesteuert sein, dass sie synchron bewegbar sind. Dadurch kann sichergestellt sein, dass ein Tub, welches durch den Elevator bewegt wird, stets gerade (d. h. parallel zur Horizontalen) transportiert wird.

Vorzugsweise weist der erste Elevator und/oder der zweite Elevator jeweils ausschließlich einen Antrieb auf. Mit anderen Worten kann jeder Elevator lediglich einen einzelnen Antrieb aufweisen. Dadurch ist keine Steuerung notwendig, um einen Synchronbetrieb der Paare der Bänder bereitzustellen. Die Kraftübertragung auf die Bänder kann von dem einzelnen Antrieb durch mechanische Umlenkung realisiert sein. Dadurch ist keine aktive Steuerung einer Antriebskraftverteilung auf die jeweiligen Paare von Bändern notwendig.

Vorzugsweise sind die Bänder des ersten Elevators und/oder des zweiten Elevators umlaufend angeordnet. Dadurch kann ein hin und her bewegen der Bänder vermieden werden. Folglich kann ein höherer Durchsatz von transportierten Tubs erreicht werden.

Sämtliche in der Beschreibung angegebene Definitionen und Weiterbildungen eines Elevators kann vorzugsweise analog auch für den zweiten oder für weitere Elevatoren, die in der Vorrichtung vorgesehen sind, gelten. Dies trifft zu, auch wenn ein Merkmal nicht explizit auf den ersten oder den zweiten Elevator bezogen ist.

Vorzugsweise ist ein Transportband zum Transport des zumindest einen Tubs vorgesehen, wobei sich das Transportband vorzugsweise in dem Zuförderabschnitt, dem Entnahmeabschnitt und/oder dem Abförderabschnitt erstreckt. Das Transportband kann beispielsweise ein Gliederzellenförderband sein, auf dem die Tubs kraftschlüssig und/oder formschlüssig gehalten sind. Mit anderen Worten können die Tubs durch ihre Gewichtskraft auf dem Transportband aufliegen und durch eine Reibkraft zwischen dem Transportband und dem Tub vorwärts transportiert werden. Das Gliederzellentransportband hat den Vorteil, dass es auch Umlenkungen definieren kann, und somit Tubs auf eine vielfältige Art und Weise transportiert und geleitet werden können. Das Transportband kann konstant angetrieben sein. Ferner kann sich das Transportband im Zuförderabschnitt und dem Entnahmeabschnitt erstrecken. Mit anderen Worten kann das Transportband so ausgestaltet sein, dass dies im Entnahmeabschnitt nicht stoppt. Somit kann das Transportband auch wenn sich ein Tub in der Entnahmeposition befindet, unter dem Tub weiterlaufen. Das Tub kann. Vorzugsweise durch den Stopp in der Entnahmeposition gehalten werden, während das Transportband unter dem Tub weiterläuft. In diesem Fall tritt ein Schlupf, bei dem die Geschwindigkeit des Tubs, welches in Reibkontakt mit dem Transportband steht, von der Geschwindigkeit des Transportbands abweicht. Dadurch muss keine aufwändige Steuerung implementiert werden, die ein Stoppen des Transportbands sowie ein erneutes Anfahren des Transportbands vorsieht. Vielmehr ist es möglich, ein Transportband konstant anzutreiben, und in mehreren Bereichen der Vorrichtung vorzusehen. Dadurch kann die Steuerung vereinfacht werden und die Abfertigungsrate erhöht werden.

Vorzugsweise weist das Transportband ausschließlich ein Antriebselement auf. Mit anderen Worten kann das Transportband ausschließlich durch einen einzelnen Motor angetrieben werden. Dies ist vorteilhaft, da hier keine verschiedenen Motorsteuerungen notwendig sind, um das Transportband in den verschiedenen Abschnitten synchron zueinander anzutreiben.

Vorzugsweise ist in dem Entnahmeabschnitt ein erster Sensor angeordnet, der dazu ausgestaltet ist, eine erste Sensorinformation auszugeben, wobei die erste Sensorinformation vorzugsweise indikativ dafür ist, ob ein Nest in dem Tub vorhanden ist. Der Sensor kann vorzugsweise ein Ultraschallsensor oder ein optischer Sensor sein, der durch Abtasten erkennen kann, ob ein Nest in einem Tub vorhanden ist. Die Sensorinformation kann Teil von Sensordaten sein, die der Sensor ausgeben kann. Dadurch kann bestimmt werden, ob ein Nest in dem Tub vorhanden ist, und damit zu entnehmen ist. Ist beispielsweise kein Nest in dem Tub vorhanden, kann das Tub ohne in die Entnahmeposition gebracht zu werden, abtransportiert werden. Dadurch ist keine Leerfahrt oder unnötige Bewegung der Entnahmevorrichtung notwendig und es kann Zeit eingespart werden.

Vorzugsweise ist in dem Entnahmeabschnitt ein zweiter Sensor angeordnet, der dazu ausgestaltet ist, eine zweite Sensorinformation auszugeben, wobei die zweite Sensorinformation vorzugsweise indikativ für eine Position des Tubs in dem Entnahmeabschnitt ist. Die erste Sensorinformation kann sich von der zweiten Sensorinformation unterscheiden. Der zweite Sensor, kann ein Sensor sein, der die Position eines Tubs bestimmen kann. Damit kann geprüft werden, ob sich das Tub in der Entnahmeposition befindet, und die Entnahmevorrichtung das Nest problemlos entnehmen kann. Dadurch kann beispielsweise bei Fehlpositionierung das fehlpositionierte Tub weitergeleitet werden, ohne dass es notwendig wäre, einen unnötigen Greifversuch mit der Entnahmevorrichtung durchzuführen. Damit kann verhindert werden, dass bei einem Misslingen eines Greifversuchs medizinische Gefäße herausfallen und die Maschine blockieren oder andere Schäden auftreten, die eine aufwändige Behebung erfordern.

Vorzugsweise ist der zumindest eine erste Stopper als ein Präzisionsstopper ausgestaltet. Damit kann sichergestellt sein, dass das Tub in der Entnahmeposition korrekt angeordnet ist. Der Präzisionsstopper kann beispielsweise mehr als ein Kontaktpunkt mit dem Tub aufweisen. Damit kann sichergestellt sein, dass auch ein Verkannten des Tubs vermieden wird, und somit sich das Tub bei einer Aktivierung des Stoppers in der Entnahmeposition befindet. Vorzugsweise kann der Stopper zwei Kontaktabschnitte aufweisen, die jeweils von einer gegenüberliegenden Seite in den Fahrweg des Tubs verlagerbar sind. Vorzugsweise sind die beiden Kontaktstellen beim Präzisionsstopper gegenüberliegend angeordnet. Die Kontaktstellen können dazu ausgestaltet sein, ein Tub an einem oberen Tubabsatz (z.B. an einem Kragen des Tubs, in dem das Nest platziert ist, zu stoppen0. Der Tubabsatz kann sich über einer Tubschulter befinden. Damit können die Kontaktstellen das Tub nicht auf der Tubunterseite stoppen. Dadurch kann das Tub präzise in der Entnahmeposition gestoppt werden. Besonders bei der Ausführungsform, bei der das Transportband weiterläuft, während sich das Tub in der Entnahmeposition befindet, ist ein guter Halt des Tubs notwendig, so dass ein Greifvorgang der Entnahmevorrichtung effizient und fehlerfrei ablaufen kann.

Vorzugsweise weist der Entnahmeabschnitt zumindest einen zweiten Stopper auf, der vorzugsweise stromaufwärts des ersten Stoppers angeordnet ist. Der zweite Stopper kann sich von dem ersten Stopper unterscheiden. Vorzugsweise ist der erste Stopper so ausgestaltet, dass er ein Tub an dem Weitertransport hindern kann. Eine spezielle Positionierung des Tubs ist hingegen keine Aufgabe des zweiten Stopper. Vielmehr soll der zweite Stopper dafür sorgen, dass stromaufwärts des ersten Stoppers ein Tub zur Verfügung gestellt wird, welches kurzfristig dem ersten Stopper zugeführt werden kann. Mit anderen Worten kann dadurch sichergestellt sein, dass stets ein Tub zur Verfügung steht, welches in die Entnahmeposition bringbar ist. Ferner kann der zweite Stopper eine größere Toleranz hinsichtlich Funktionsweise und/oder Anordnung aufweisen als der erste Stopper.

Vorzugsweise ist der zumindest eine zweite Stopper in der Schwererichtung von unten in einen Fahrweg des Tubs verlagerbar. Mit anderen Worten kann der zumindest eine zweite Stopper von unten in den Fahrweg verlagert werden. Dadurch kann der zweite Stopper mit einer einfachen Drehbewegung angesteuert werden und ein Tub an einem Weitertransport hindern. Ferner kann, während ein Tub von dem zumindest einen zweiten Stopper gehalten wird, ein Transportband, auf welchem das Tub aufliegt, weiterbetrieben werden. Das heißt auch in diesem Fall ist kein Stoppen des Transportbands notwendig, um ein Tub an dem Weitertransport zu hindern.

Vorzugsweise ist der erste Stopper quer zur Schwererichtung, in einen Fahrweg des Tubs verlagert war. Dadurch kann der zumindest eine erste Stopper an einem Kragen des Tubs angreifen, wodurch das Tub genau positioniert werden kann. Mit anderen Worten kann die restliche Ausführung des Tubs für eine korrekte Positionierung unerheblich sein, und lediglich der Kragen dazu benutzt werden, die Entnahmeposition einzunehmen. Dies ist vor allem vor dem Hintergrund notwendig, da es unterschiedlich ausgeformte Tubs gibt, die abhängig von den zu transportierenden medizinischen Gefäßen einen anderen Körper aufweisen können. Der Kragen jedoch ist ein bei allen Tubs vorhandener Bezugspunkt. Somit kann sichergestellt sein, dass die Entnahmeposition optimal durch das Tub eingenommen werden kann, indem der erste Stopper betätigt wird. Vorzugsweise weist der Abförderabschnitt zumindest einen dritten Stopper auf, der stromabwärts der Entnahmeposition angeordnet ist. Somit kann durch den zumindest einen dritten Stopper die Möglichkeit geschaffen werden, stromabwärts der Entnahmevorrichtung ein Tub erneut zurückzuhalten und an einem Weitertransport zu hindern. Dies ist besonders dann vorteilhaft, wenn eine bestimmte Frequenz am Ausgang der Vorrichtung benötigt wird. Ferner kann dies vorteilhaft sein, wenn ein Pufferabschnitt vorgesehen ist, der Tabs aus dem Strom aussondert und zwischenspeichert. Der Aussonderungsvorgang kann beispielsweise durch eine Hebevorrichtung oder eine Weichenvorrichtung realisiert sein, die den Strom von Tubs kurzzeitig blockiert. Dadurch ist es vorteilhaft, wenn stromaufwärts eines solchen Pufferabschnitts ein Tub kurzzeitig zurückgehalten wird, bis ein problemloser Weitertransport an dem Pufferabschnitt vorbei ermöglicht ist.

Vorzugsweise weist der Entnahmeabschnitt zumindest ein Führungselement auf, das dazu ausgestaltet ist, einen Transportweg des Tubs zu begrenzen. Das zumindest eine Führungselement kann beispielsweise eine leitplankenartige Struktur sein, die das zumindest eine zu transportierende Tub führt. Mit anderen Worten kann das Tub durch das Transportband von unten gestützt und bewegt werden, wohingegen ein seitliches ausweichen des Tubs durch das zumindest eine Führungselement verhindert wird. Ferner kann das zumindest eine Führungselement so mit einem der Stopper Zusammenwirken, dass ein seitliches Ausweichen des Tubs auch bei einem Stopp (beispielsweise durch den zumindest einen ersten Stopper) vermieden wird. Damit kann weiter sichergestellt sein, dass das Tub in der Entnahmeposition korrekt angeordnet werden kann.

Vorzugsweise weist der Abförderabschnitt eine Umlenkung auf, um die Förderrichtung des Tubs zu ändern. Vorzugsweise ist die Umlenkung so ausgestaltet, dass eine Transportrichtung eines Tubs um zumindest 90° geändert wird. Damit kann eine besonders kompakte Vorrichtung erzielt werden, da wenig Raum für den Abtransport notwendig ist. Diese Funktion kann mittels eines Tub-Überschubs erzielt werden.

Gemäß einem weiteren Aspekt der vorliegenden Erfindung wird ein Nesthandhabungssystem zum Handhaben eines Tubs und eines Nests bereitgestellt. Das Nesthandhabungssystem kann eine Nestentnahmevorrichtung gemäß einer der obigen Ausführungsformen zur Entnahme eines Nests aus einem Tub umfassen. Ferner kann das Nest Handhabungssystem eine Nesteinführvorrichtung zum Einführen eines Nests in ein Tub umfassen, wobei die Nesteinführvorrichtung, in dem Abförderabschnitt angeordnet ist. Die Nesteinführvorrichtung kann einen Einführabschnitt umfassen, der dazu ausgestaltet ist, das zumindest eine Tub in einer Einführposition zu positionieren. Ferner kann die Nesteinführvorrichtung eine Einführvorrichtung umfassen, die dazu ausgestaltet ist, das Nest in ein Tub, welches sich in der Einführposition befindet einzuführen.

Das Nesthandhabungssystem bietet den Vorteil, dass eine Nestentnahmevorrichtung mit einer Nesteinführvorrichtung kombiniert werden kann. Damit bietet sich die Möglichkeit, dass Nester, welche zuvor zusammen mit medizinischen Gefäßen aus einem Tub entnommen worden sind, später ohne die medizinischen Gefäße wieder einem Tub zugeführt werden können. Dadurch kann eine ganzheitliche Handhabung von Tubs mit Nestern bereitgestellt sein. So kann beispielsweise während das Nest aus dem Tub entnommen ist und wie oben beschrieben in einem Transportband abtransportiert wird, die Gefäße aus dem Nest entfernt werden, sodass das Nest ohne Gefäße vorliegt. Mit der Nesteinführvorrichtung kann das leere Nest dann wieder in einem Tub eingeführt werden.

Vorzugsweise ist die Nesteinführvorrichtung stromabwärts des Pufferabschnitts angeordnet. Der Pufferabschnitt kann beispielsweise dazu ausgestaltet sein, die leeren Tubs so der Nesteinführvorrichtung zur Verfügung zu stellen, dass diese die Nester effizient in bereitgestellte Tubs eingeführt werden können. Insbesondere bei einem Anlaufen des Systems kann dies vorteilhaft sein, da mehr leere Tubs zur Verfügung stehen können, als entleerte Nester wieder einzuführen sind. Dadurch kann der Pufferabschnitt die überschüssigen Tubs zwischenspeichern, sodass die Maschine dennoch ohne Probleme und ohne Unterbrechung arbeiten kann.

Vorzugsweise ist die Nesteinführvorrichtung stromaufwärts des zweiten Elevators angeordnet. Mit anderen Worten kann ein Tub, in welches durch die Nesteinführvorrichtung wieder ein Nest eingeführt ist, zusammen mit dem Nest in eine Vertikalrichtung abtransportiert werden. Dadurch kann die Maschine vielfältig in Line in bestehende Anlagen integriert werden, da auch eine vertikale Zufuhr und Abfuhr ermöglicht ist.

Vorzugsweise sind die Nestentnahmevorrichtung und die Nesteinführvorrichtung so miteinander verbunden, dass die durch die Nestentnahmevorrichtung entnommenen Nester den Tubs der Nesteinführvorrichtung wieder zugeführt werden können. Mit anderen Worten kann es sich hierbei um eine Maschine handeln, bei der keine Tubs ohne Nest abgeführt werden. Mit anderen Worten können die Nester aus den Tubs entnommen werden und anschließend alle Tubs wieder mit Nestern versehen werden. Dadurch ist eine weitere Handhabung durch andere Maschinen oder einen manuellen Nutzer überflüssig und die Effizienz kann gesteigert werden. Vorzugsweise sind die Nestentnahmevorrichtungen und die Nesteinführvorrichtung vorgesehen, dass ein Tub sowohl die Nestentnahmevorrichtung als auch die Nesteinfuhrvorrichtung durchläuft.

Gemäß einem weiteren Aspekt der vorliegenden Erfindung wird ein Verfahren zum Handhaben eines Nests und eines Tubs bereitgestellt. Das Verfahren kann ein Zufördern zumindest eines Tubs umfassen, in welchem ein Nest aufgenommen ist, wobei das Tub vorzugsweise in einer Förderrichtung zugefördert wird. Ferner kann das Verfahren ein positionieren des zumindest einen Tubs in einer Entnahmeposition umfassen. Ferner kann das Verfahren ein Entnehmen des Nests aus dem Tub umfassen, welches sich in Entnahmeposition befindet. Ferner kann das Verfahren ein Abfördern des Tubs umfassen. Vorzugsweise wird das positionieren des Tubs mit einem ersten Stopper durchgeführt, um das Tub in der Entnahmeposition zu positionieren.

Einzelne Merkmale oder Ausführungsformen können. Mit anderen Merkmalen oder anderen Ausführungsform kombiniert werden und so neue Ausführungsformen bilden. Fortbildungen und Vorteile, die in Verbindung mit den Merkmalen oder Ausführungsformen genannt sind, gelten analog auch für die neuen Ausführungsformen. Weiterbildungen und Vorteile, die in Zusammenhang mit der Vorrichtung genannt sind, gelten auch für das Verfahren und andersherum.

Im Folgenden wird die vorliegende Erfindung mit Bezug auf die beigefügten Figuren im Detail beschrieben.
- **Fig. 1**: zeigt eine schematische und perspektivische Darstellung eines Tubs mit einem Nest.
- **Fig. 2**: ist eine schematische und perspektivische Darstellung eines Teils einer Nestentnahmevorrichtung gemäß einer Ausführungsform der vorliegenden Erfindung.
- **Fig. 3**: ist eine schematische und perspektivische Darstellung eines Teils der Nestentnahmevorrichtung gemäß einer Ausführungsform der vorliegenden Erfindung.
- **Fig. 4**: ist eine schematische und perspektivische Ansicht eines Teils einer Entnahmevorrichtung gemäß einer Ausführungsform der vorliegenden Erfindung.
- **Fig. 5**: ist eine perspektivische und schematische Ansicht eines Teils einer Entnahmevorrichtung gemäß einer Ausführungsform der vorliegenden Erfindung.
- **Fig. 6**: ist eine perspektivische und schematische Ansicht eines Teils einer Entnahmevorrichtung gemäß einer Ausführungsform der vorliegenden Erfindung.
- **Fig. 7**: ist eine perspektivische und schematische Ansicht eines Teils einer Entnahmevorrichtung gemäß einer Ausführungsform der vorliegenden Erfindung.
- **Fig. 8**: ist eine perspektivische und schematische Ansicht eines Teils einer Entnahmevorrichtung gemäß einer Ausführungsform der vorliegenden Erfindung.
- **Fig. 9**: ist eine Draufsicht auf ein Nesthandhabungssystem gemäß einer Ausführungsform der vorliegenden Erfindung.
- **Fig. 10**: ist ein schematisches Ablaufdiagramm eines Verfahrens gemäß Ausführungsform der vorliegenden Erfindung.

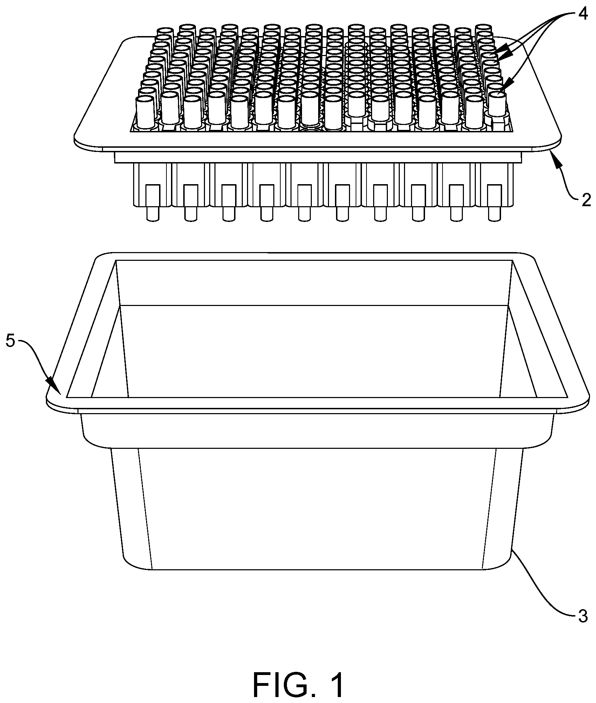

**Fig. 1** ist eine schematische und perspektivische Ansicht eines Tubs 3 mit einem Nest 2. Das Tub 4 und das Nest 3 sind so ausgestaltet, dass das Nest herausnehmbar in dem Tub 3 anordenbar ist. Das Nest 2 hat eine Vielzahl von Aufnahmeabschnitten, in denen jeweils ein Gefäß 4 angeordnet werden kann. Die Gefäße 4, die in dem Nest 2 angeordnet sind, kontaktieren das Tub 3 nicht, wenn das Nest 2 in dem Tub 3 angeordnet ist. Das Nest ermöglicht also einen Transport von einer Vielzahl von Gefäßen 4, ohne dass jedes einzelne Gefäß gehandhabt werden müsste. Das Tub 3 hat eine wannenartige Ausgestaltung mit einem umlaufenden Kragen 5. Der Kragen 5 ist dabei so ausgestaltet, dass das Tub 3 mit dem Kragen 5 gehandhabt werden kann.

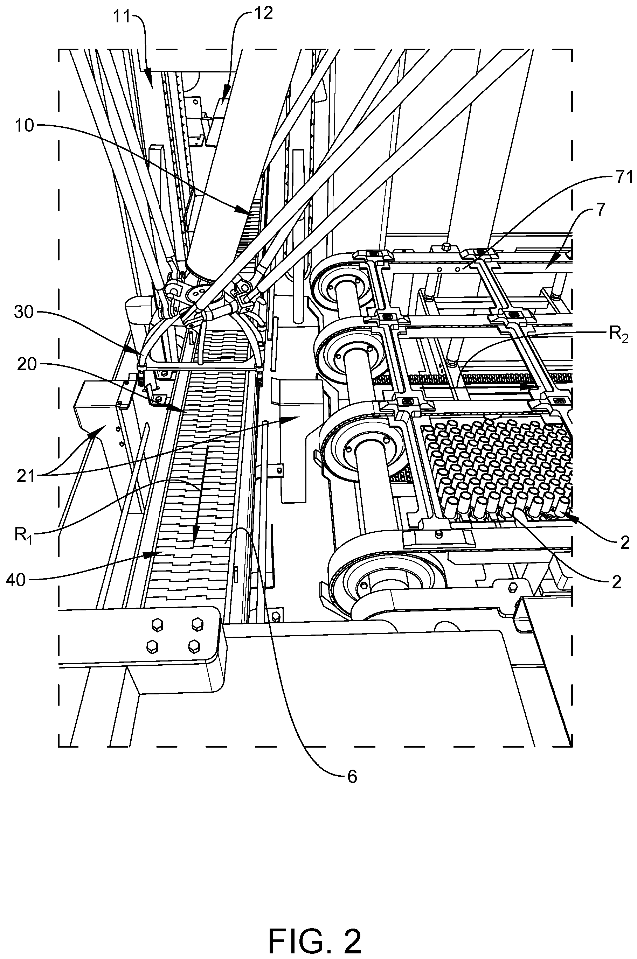

**Fig. 2** ist eine schematische und perspektivische Ansicht eines Teils der Nestentnahmevorrichtung 1 gemäß einer Ausführungsform der vorliegenden Erfindung. Genauer gesagt zeigt Fig. 2 einen Blick entgegen der Transportrichtung R1, welche ein Tub 3 während des Betriebs der Nestentnahmevorrichtung 1 durchläuft. In Fig. 2 ist ein Transportband 6 zu erkennen, welches in der Transportrichtung R1 angetrieben wird. Auf dem Transportband 6 sind die Tubs 3 aufbringbar, sodass das Tub 3 in der Transportrichtung R1 transportiert wird. Die Tubs, die der Nestentnahmevorrichtung 1 zugeführt werden, werden zuerst auf einem Zuförderabschnitt 10 transportiert. Bei der vorliegenden Ausführungsform weist der Zuförderabschnitt 10 einen ersten Elevator 11 auf. Mit anderen Worten können die Tubs 3 von einer vertikal oberhalb des Transportband 6 liegenden Ebene dem Transportband 6 durch den ersten Elevator 11 zugeführt werden. Zusätzlich besteht die Möglichkeit, Tubs 3 auch in der Ebene des Transportbands 6 zuzuführen. Dies ist in Fig. 2 im Hintergrund zu erkennen, wo eine manuelle Zuführung 12 dargestellt ist. Dadurch kann über mehrere Zufuhrwege ein Tub 3 der Nestentnahmevorrichtung zugeführt werden. Anschließend wird das Tub einem Entnahmeabschnitt 20 zugeführt. In dem Entnahmeabschnitt 20 wird das Tub 3 in der Entnahmeposition positioniert. Die Positionierung findet durch einen ersten Stopper 21 statt. Bei der vorliegenden Ausführungsform handelt es sich bei dem ersten Stopper 21, um einen Präzisionsstopper, der das Tub 3, so positionieren kann, dass dieses sicher in der Entnahmeposition angeordnet ist. Befindet sich das Tub 3 in der Entnahmeposition kann eine Entnahmevorrichtung 30 so betätigt werden, dass das Nest 2 aus dem Tub 3 herausgehoben werden kann. Die Entnahmevorrichtung 30 ist so konfiguriert, dass sie ein entnommenes Nest 2 einem weiteren Transportband 7 zuführen kann. Des Transportband 7 hat bei der vorliegenden Ausführungsform Aufnahmeabschnitte, in denen jeweils ein Nest 2 aufgenommen werden kann. Die Transportvorrichtung 7 weist bei der vorliegenden Ausführungsform drei Aufnahmeabschnitte nebeneinander quer zu der zweiten Förderrichtung R2 auf. Die Entnahmevorrichtung 30 ist in einer Ausgangsposition so positioniert, dass sie angrenzend zu dem mittleren Aufnahmeabschnitt der Transportvorrichtung 7 angeordnet ist. Dadurch ist sichergestellt, dass die Entnahmevorrichtung den Minimalen Verfahrweg hat, um von der Entnahmeposition zu einem der drei Aufnahmeabschnitte der Transportvorrichtung zu gelangen. Ist das Nest 2 aus dem Tub 3 entnommen, wird das nun leere, Tub 3 durch einen Abförderabschnitt 40 abtransportiert. Bei der vorliegenden Ausführungsform ist das Transportband durchgängig durch den Zuförderabschnitt 10, den Entnahmeabschnitt 20 sowie den Abförderabschnitt 40 angeordnet. Damit ist für die jeweiligen Abschnitte nur ein einzelnes Transportband 6 notwendig. Das Transportband wird, konstant, angetrieben und stoppt daher nicht. Das Tub wird in der Entnahmeposition durch den ersten Stopper 21 gehalten, während das Transportband 6 unter dem Tub weiter bewegt wird.

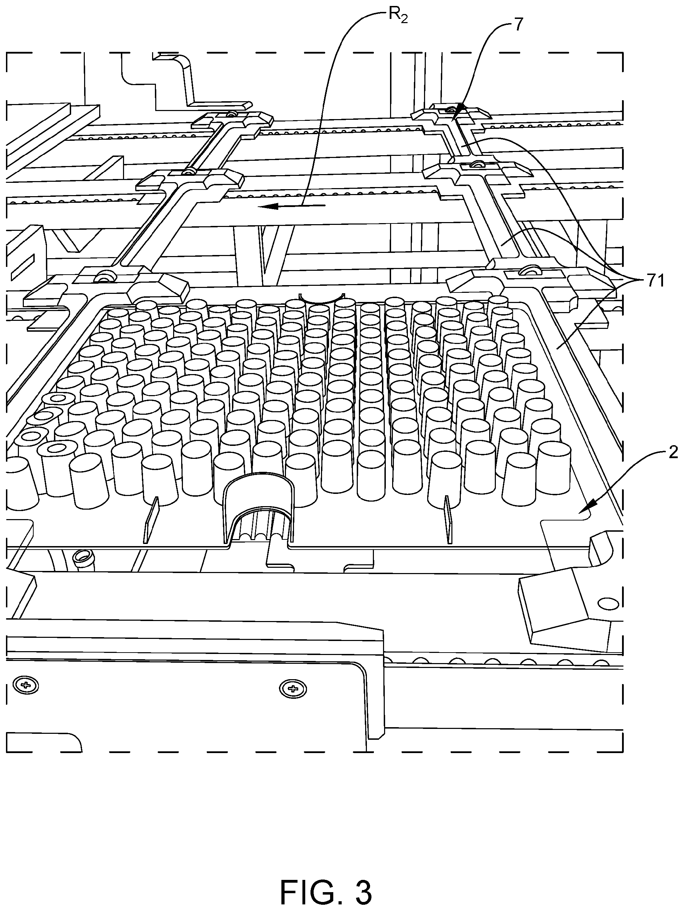

**Fig. 3** ist eine schematische und perspektivische Ansicht der Transportvorrichtung 7 gemäß einer Ausführungsform der vorliegenden Erfindung. Wie in Fig. 3 dargestellt, weist die Transportvorrichtung 7 in der zweiten Transportrichtung R2 mehrere Aufnahmeabschnitte 71 auf. Quer zu der Transportrichtung R2 sind bei der vorliegenden Ausführungsform drei Aufnahmeabschnitte 71 nebeneinander angeordnet. Die Transportabschnitte 71 sind dabei jeweils so angeordnet, dass sie ein Nest 2 halten können, ohne, dass in dem Nest befindliche Behälter 4 zu Schaden kommen. Die Transportvorrichtung 7 ist dabei als umlaufende Transportvorrichtung vorgesehen, sodass hier keine hin und her Bewegung notwendig ist. Dadurch kann der Durchsatz gesteigert werden.

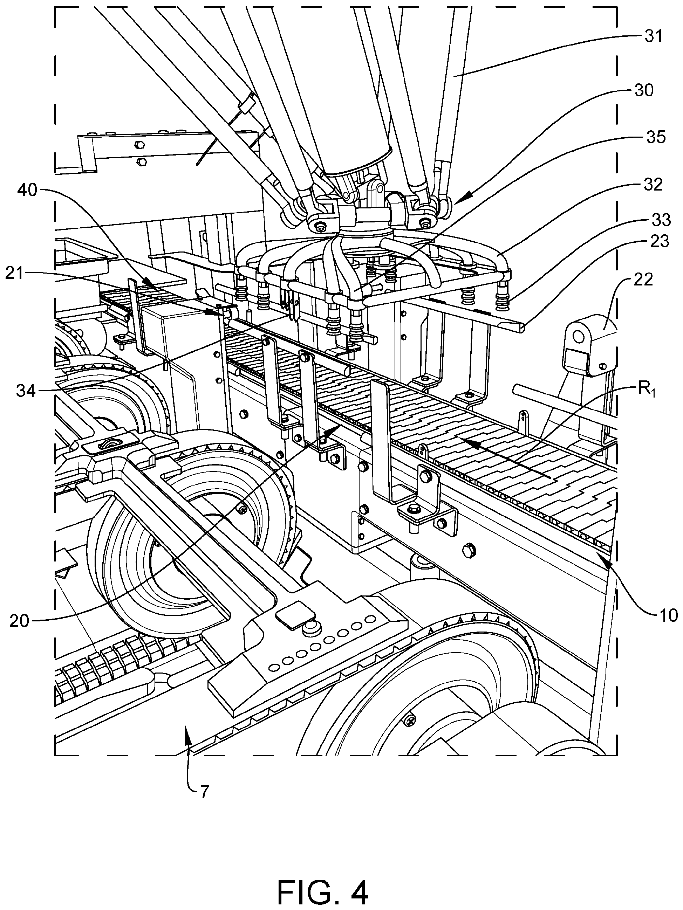

**Fig. 4** ist eine schematische und perspektivische Ansicht eines Teils der Entnahmevorrichtung 1 gemäß einer Ausführungsform der vorliegenden Erfindung. In Fig. 4 ist zu erkennen, dass der Entnahmeabschnitt 20 einen ersten Sensor 22 aufweist, der erste Sensorinformation ausgeben kann. Die ersten Sensorinformationen sind Indikativ dafür, ob ein Tub 2 in einem Nest 3 aufgenommen ist. Ferner weist der Entnahmeabschnitt zumindest ein Führungselement 23 auf, welches einen Transportweg eines Tubs 3 begrenzen kann. Die Entnahmevorrichtung 30 weist einen Bewegungsabschnitt 31 und einen Greifabschnitt 32 auf. Der Bewegungsabschnitt 31 ist bei der vorliegenden Ausführungsform als ein sogenannter Delta Roboter ausgestaltet. Damit kann die Entnahmevorrichtung jeder Position im Raum anfahren. Die Greifvorrichtung 32 ist als ein Sauggreifer ausgestaltet. Der Sauggreifer weist bei der vorliegenden Ausführungsform 8 einzelne Saugköpfe auf. Die Saugköpfe 33 sind so an der Greifvorrichtung 32 vorgesehen, dass sie mit einem Kontaktabschnitt eines Nests 2 korrespondieren. Somit kann sichergestellt sein, dass die Entnahmevorrichtung 30 ein Nest 2 problemlos aus einem Tub 3 entnehmen kann. Zur zuverlässigeren Positionierung der Greifvorrichtung 32 weist die Greifvorrichtung 32 der vorliegenden Ausführungsform einen Vorsprung 34 auf. Der Vorsprung 34 erstreckt sich in derselben Richtung von der Greifvorrichtung 32 wie die Saugköpfe 33. Der Vorsprung 34 wirkt damit als eine Zentrierhilfe, die bei Kontakt mit einem Nest 2 dafür sorgt, dass geringe Lageabweichungen zwischen der Greifvorrichtung 32 und dem Nest behoben werden. Dafür kann der Vorsprung 34, eine sich verjüngende Form aufweisen.

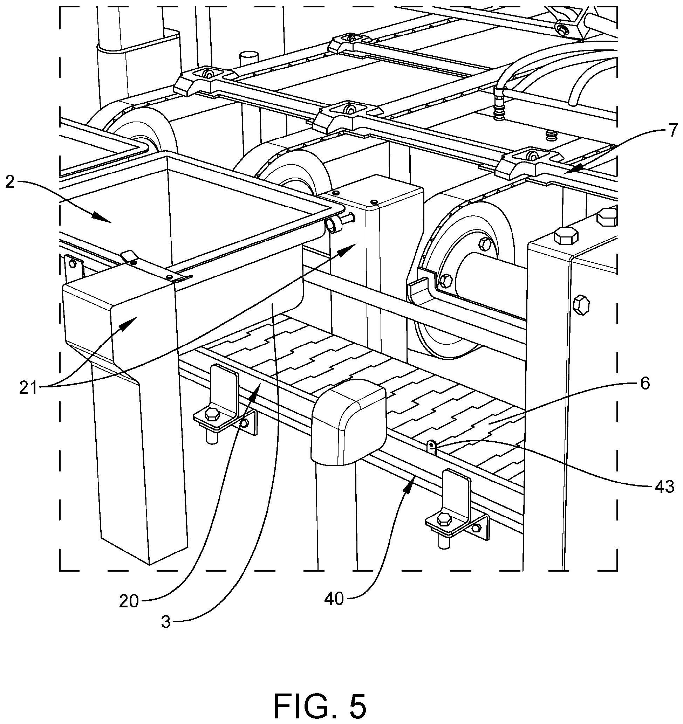

**Fig. 5** ist eine schematische und perspektivische Ansicht eines Teils der Entnahmevorrichtung 1 gemäß einer Ausführungsform der vorliegenden Erfindung. In Fig. 5 ist ein Tub 3 dargestellt, welches sich in der Entnahmeposition befindet. Mit anderen Worten wird bei der in Fig. 5 dargestellten Situation des Transportband 6 weiter angetrieben und das Tub 3 durch den ersten Stopper 21 in der Entnahmeposition gehalten. In einem nächsten Schritt wird die Entnahmevorrichtung 30, das Nest 2, welches in dem Tub 3 aufgenommen ist, entnehmen und der Fördervorrichtung 7 zuführen. Nachdem das Nest 2 aus dem Tub 3 entnommen ist, wird der erste Stopper 21 sich zurückziehen, sodass das Tub 3 weiter durch das Transportband 6 in den Abförderabschnitt 40 transportiert wird. Der Abförderabschnitt 40 weist einen weiteren Stopper 43 auf, der das Tub stoppen kann, nachdem es die Entnahmeposition verlassen hat. Somit kann die Abfuhr von Tubs 3 gezielt gesteuert werden.

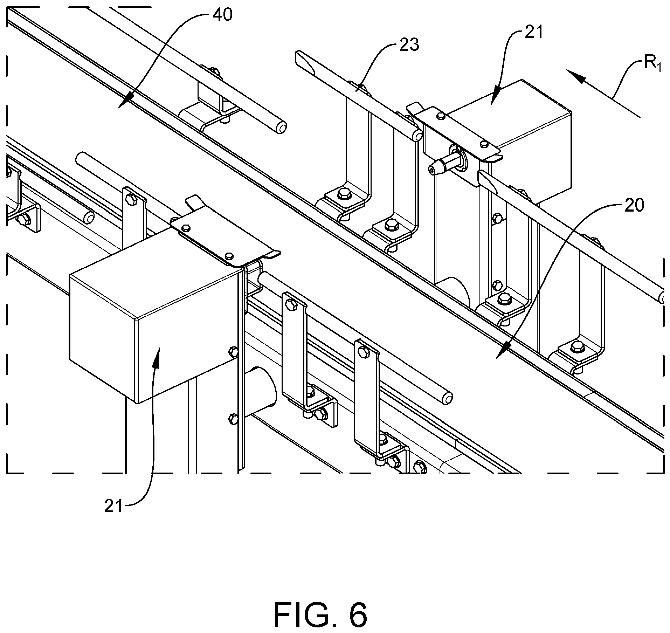

Die **Fig. 6** ist eine schematische und perspektivische Ansicht des Entnahmeabschnitts 20 gemäß einer Ausführungsform der vorliegenden Erfindung. In Fig. 6 ist zu erkennen, dass es sich bei dem ersten Stopper 21 um ein Präzisionsstopper handelt, der an beiden Seiten quer zu der ersten Förderrichtung R1 angeordnet ist. Ferner sind mehrere Führungselemente 23 erkennbar, die den Transportweg eines Tubs begrenzen.

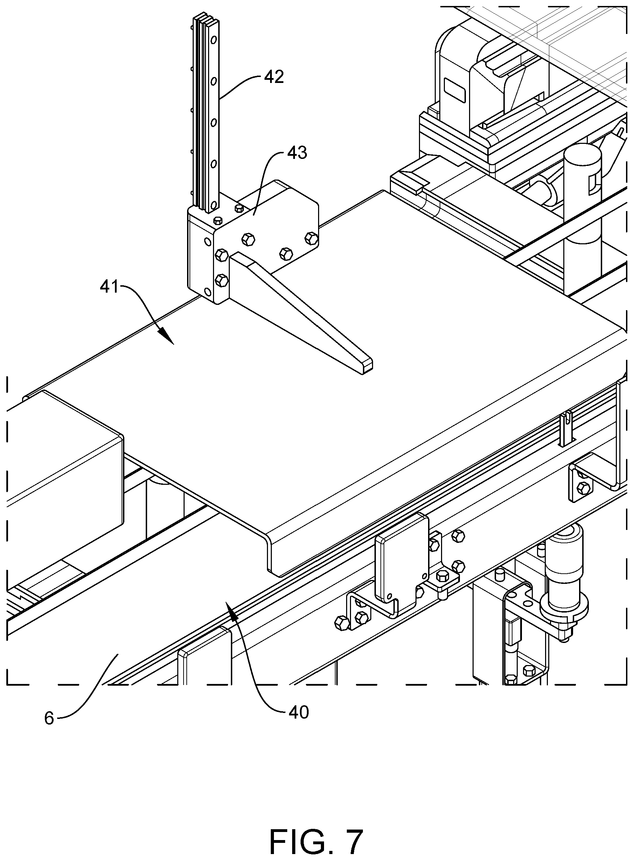

**Fig. 7** ist eine schematische und perspektivische Ansicht eines Abführabschnitts 40 gemäß einer Ausführungsform der vorliegenden Erfindung. Genauer gesagt ist in Fig. 7, ein Pufferabschnitt 41 dargestellt. Der Pufferabschnitt 41 ist dazu ausgestaltet, zumindest ein Tub 3 zwischenzuspeichern. Zwischenspeichern bedeutet bei der vorliegenden Ausführungsform, dass ein Tub 3 von dem Transportband 6 angehoben wird und in dem Pufferabschnitt 41 zwischengespeichert wird. Damit kann gesteuert werden, in welcher Frequenz und in welcher Anzahl Tubs 3 weitergeleitet werden. Pufferabschnitt 41 der vorliegenden Ausführungsform ist dazu ausgestaltet, zumindest ein Tub 3 vertikal anzuheben, sodass auf dem Transportband 6 weitere Tubs 3 den Pufferabschnitt 41 passieren können, solange ein Tub in dem Pufferabschnitt 41 zwischengespeichert ist. Der Pufferabschnitt 41 funktioniert mit einer Gewindespindel 42 und einem Zahnradantrieb 44.

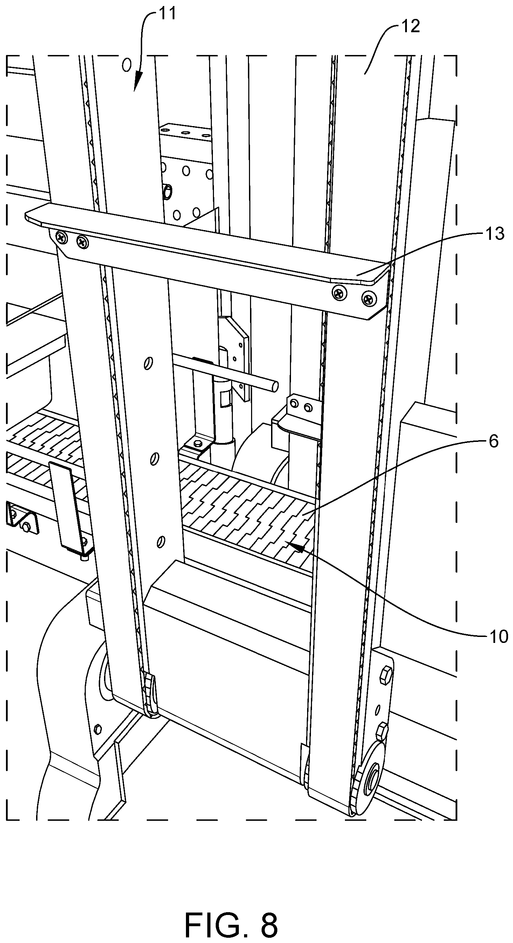

**Fig. 8** ist eine perspektivische und schematische Ansicht eines Elevators gemäß einer Ausführungsform der vorliegenden Erfindung. Zu beachten ist, dass bei einer Ausführungsform der vorliegenden Erfindung ein erster Elevator 11 und ein zweiter Elevator 42 vorgesehen sind. Beide Elevatoren 11, 42 können identisch ausgestaltet sein. Mit anderen Worten können beide Elevatoren dieselben oder zumindest teilweise gleiche Merkmale aufweisen. Im Folgenden wird auf den in Fig. 8 dargestellten ersten Elevator 11 eingegangen, dieselbe Beschreibung gilt jedoch auch für den zweiten Elevator 42. Der erste Elevator 11 weist insgesamt 4 Bänder 12 auf. Die 4 Bänder 12 verteilen sich auf 2 Paare von Bändern. Ein Paar von Bändern bedeutet, dass zwei Bänder über eine Welle umlaufend angetrieben werden. Die beiden Paare von Bändern sind so gegenüber angeordnet, dass sie zwischen sich das Transportband 6 aufnehmen. Die Bänder 12 sind umlaufend angeordnet, sodass hier keine hin- und her-Bewegung notwendig ist. Die beiden Bänder eines Paars von Bändern sind mit einem Stegabschnitt 13 verbunden. Der Stegabschnitt 13 kann auch als Auflageabschnitt bezeichnet werden. Der Stegabschnitt 13 ist dazu ausgestaltet, mit einem Kragen 5 eines Tubs 3 zu korrespondieren. Dadurch, dass die zwei Paare von Bändern gegenüberliegend angeordnet sind, können jeweils zwei Stickabschnitte 13 ein Tub 3 in der Vertikalrichtung bewegen. Der Elevator 11 weist zudem nur ein einzelnes Antriebselement auf, welches über eine mechanische Getriebeverschaltung beide Paare von Bändern antreibt. Daher ist ein Gleichlauf der Paare der Bänder gewährleistet.

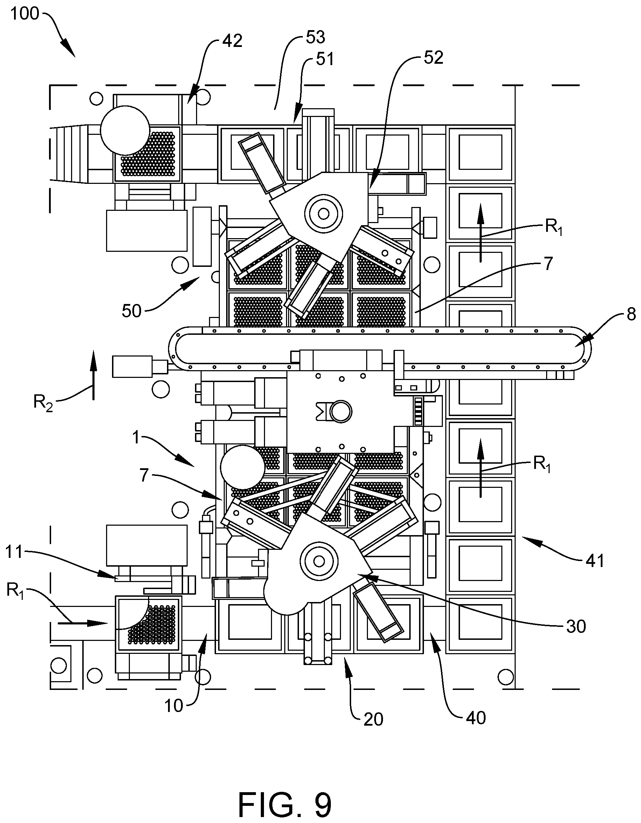

**Fig. 9** ist eine schematische Draufsicht auf ein Nesthandhabungssystem 100 gemäß einer Ausführungsform der vorliegenden Erfindung. Im unteren Teil der Fig. 9 ist die Nestentnahmevorrichtung 1 gemäß einer der obigen Ausführungsformen dargestellt. Im oberen Teil der Fig. 9 ist eine Nesteinführvorrichtung 50 dargestellt. Zwischen der Nestentnahmevorrichtung 1 und der Nesteinführvorrichtung 50 erstreckt sich die Transportvorrichtung 7. Somit werden die Nester 2 durch die Nestentnahmevorrichtung 1 aus den Tubs 3 entnommen und der Transportvorrichtung 7 zugeführt. Die Nester 2 werden dann durch die Transportvorrichtung 7 in der zweiten Transportrichtung R2 zu der Nesteinführvorrichtung 50 transportiert. Auf diesem Weg kann eine weitere Vorrichtung acht Gefäße 4 aus den Nestern 2 entnehmen und abtransportieren. Mit anderen Worten können der Nesteinführvorrichtung lediglich leere Nester 2 zugeführt werden. Die leeren Tubs werden nach dem Entnahmeabschnitt 20, durch den Abförderabschnitt 40 ebenfalls zu der Nesteinführvorrichtung 50 transportiert. Die Nesteinführvorrichtung 50 weist einen Einführabschnitt 51, auf. Der Einführabschnitt 51 weist wiederum einen Nesteinführvorrichtung-Stopper 53 auf, der ein leeres Nest 3 so positionieren kann, dass eine Einführvorrichtung 52 das Nest von der Transportvorrichtung 7 entnehmen kann und dem leeren Tub, welches von dem Stopper 53 gehalten wird, zuführen kann. Danach kann der Stopper 53 das Halten des Nests beenden, sodass das Nest weiter abtransportiert werden kann. In einer Ausführungsform wird das Tub 3 mit dem leeren Nest einem zweiten Elevator 42 zugeführt, welcher das Tub 3 in einer vertikalen Richtung abtransportieren kann.

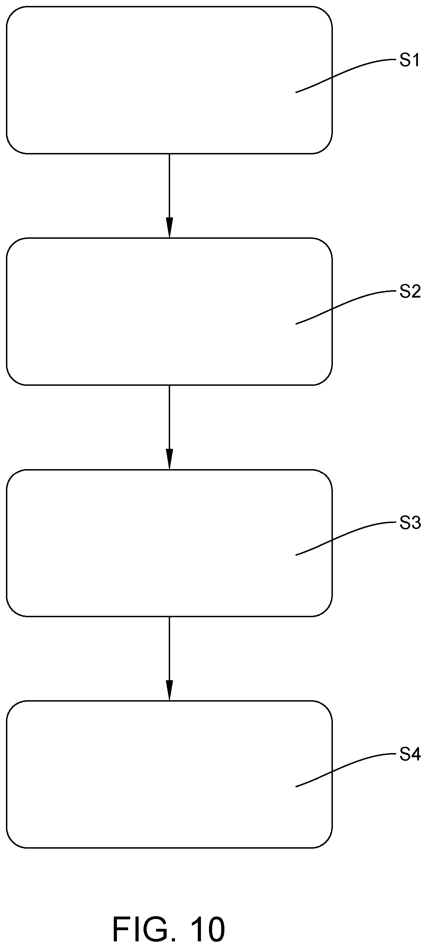

**Fig. 10** ist ein schematisches Ablaufdiagramm eines Verfahrens gemäß einer Ausführungsform der vorliegenden Erfindung. In Schritt S1 wird zumindest ein Tub zugefördert, wobei in dem Tub ein Nest aufgenommen ist. Die Zuförderung findet in der Förderrichtung R1 statt. In einem Schritt S 2 wird das zumindest eine Tub in einer Entnahmeposition positioniert. Die Entnahmeposition wird durch einen ersten Stopper 21 definiert. In einem weiteren Schritt S3 wird das Nest aus dem Tub 3 durch eine Entnahmevorrichtung 38 entnommen. Das leere Tub wird in einem Schritt S4 abgefördert. Durch den ersten Stopper kann ein präzises Positionieren des Tubs realisiert sein.

### Bezugszeichenliste:

- 1: Nestentnahmevorrichtung
- 2: Nest
- 3: Tub
- 4: Behälter
- 5: Kragen
- 6: Förderband
- 7: Transportvorrichtung
- 8: weitere Vorrichtung
- 10: Zuförderabschnitt
- 11: erster Elevator
- 12: Bänder
- 20: Entnahmeabschnitt
- 21: erster Stopper
- 22: erster Sensor
- 23: Führungselement
- 30: Entnahmevorrichtung
- 31: Bewegungsabschnitt
- 32: Greifvorrichtung
- 33: Saugkopf
- 34: Vorsprung
- 35: Unterdruckleitung
- 40: Abförderabschnitt
- 41: Pufferabschnitt
- 42: Zahnschiene
- 43: weiterer Stopper
- 44: Zahnradvorrichtung
- 50: Nesteinführvorrichtung
- 51: Einführabschnitt
- 52: Einführvorrichtung
- 53: Nesteinführvorrichtung-Stopper
- 100: Nesthandhabungssystem
- R1: erste Richtung oder Förderrichtung
- R2: zweite Richtung

## Patentansprüche

1. Nestentnahmevorrichtung (1) zum Entnehmen eines Nests (2) aus einem Tub (3), umfassend:
einen Zuförderabschnitt (10), der dazu ausgestaltet ist, zumindest ein Tub (3), in welchem ein Nest (2) aufgenommen ist, in einer Förderrichtung (R1) zu fördern,
einen Entnahmeabschnitt (20), der dazu ausgestaltet ist, das zumindest eine Tub (3) in einer Entnahmeposition zu positionieren,
eine Entnahmevorrichtung (30), die dazu ausgestaltet ist, das Nest (2) aus dem Tub (3), welches sich in der Entnahmeposition befindet, zu entnehmen,
einen Abförderabschnitt (40), der dazu ausgestaltet ist, das Tub (3) abzutransportieren,
wobei der Entnahmeabschnitt (20) zumindest einen ersten Stopper (21) umfasst, um das Tub (3) in der Entnahmeposition zu positionieren.

2. Nestentnahmevorrichtung (1) gemäß Anspruch 1, wobei der Abförderabschnitt (40) einen Pufferabschnitt (41) aufweist, der dazu ausgestaltet ist, zumindest ein Tub (3) zwischenzuspeichern.

3. Nestentnahmevorrichtung (1) gemäß Anspruch 1 oder 2, wobei der Pufferabschnitt (41) dazu ausgestaltet ist, ein leeres Tub (3) zwischenzuspeichern.

4. Nestentnahmevorrichtung (1) gemäß einem der vorhergehenden Ansprüche, wobei der Pufferabschnitt (41) dazu ausgestaltet ist, das zumindest eine Tub (3), welches zwischengespeichert werden soll, entgegen der Schwererichtung anzuheben.

5. Nestentnahmevorrichtung (1) gemäß einem der vorhergehenden Ansprüche, wobei der Abförderabschnitt (40) dazu ausgestaltet ist, leere Tubs (3) aus der Nestentnahmevorrichtung (1) abzuführen.

6. Nestentnahmevorrichtung (1) gemäß einem der vorhergehenden Ansprüche, wobei der Zuförderabschnitt (10) einen ersten Elevator (11) umfasst, der dazu ausgestaltet ist, das Tub (3) in einer Vertikalförderrichtung zu fördern.

7. Nestentnahmevorrichtung (1) gemäß einem der vorhergehenden Ansprüche, wobei der erste Elevator ein Paar aus zwei Bändern (12) aufweist, die dazu ausgestaltet sind, zumindest ein Tub (3) in der Vertikalförderrichtung zu fördern, wobei die Bänder vorzugsweise jeweils umlaufend angeordnet sind.

8. Nestentnahmevorrichtung (1) gemäß einem der vorhergehenden Ansprüche, wobei ein Transportband zum Transport des zumindest einen Tubs (3) vorgesehen ist, wobei sich das Transportband in dem Zuförderabschnitt (10), dem Entnahmeabschnitt (20) und/oder dem Abförderabschnitt (40) erstreckt.

9. Nestentnahmevorrichtung (1) gemäß einem der vorhergehenden Ansprüche, wobei in dem Entnahmeabschnitt (20) ein erster Sensor (22) angeordnet ist, der dazu ausgestaltet ist, eine erste Sensorinformation auszugeben, wobei die erste Sensorinformation indikativ dafür ist, ob ein Nest (2) in dem Tub (3) vorhanden ist.

10. Nestentnahmevorrichtung (1) gemäß einem der vorhergehenden Ansprüche, wobei in dem Entnahmeabschnitt (20) ein zweiter Sensor angeordnet ist, der dazu ausgestaltet ist, eine zweite Sensorinformation auszugeben, wobei die zweite Sensorinformation vorzugsweise indikativ für eine Position des Tubs in dem Entnahmeabschnitt ist.

11. Nestentnahmevorrichtung (1) gemäß einem der vorhergehenden Ansprüche, wobei der Entnahmeabschnitt (20) zumindest einen zweiten Stopper aufweist, der stromaufwärts des ersten Stopper (21) angeordnet ist.

12. Nestentnahmevorrichtung (1) gemäß einem der vorhergehenden Ansprüche, wobei der Abförderabschnitt (40) zumindest einen dritten Stopper aufweist, der Stromabwärts der Entnahmeposition angeordnet ist.

13. Nesthandhabungssystem (100) zum Handhaben eines Tubs (3) und eines Nestes (2), umfassend
eine Nestentnahmevorrichtung (1) gemäß einem der vorhergehenden Ansprüche zur Entnahme eines Nests (2) aus einem Tub (3), und
eine Nesteinführvorrichtung (50) zum Einführen eines Nests (2) in ein Tub (3), wobei die Nesteinführvorrichtung (50) in dem Abförderabschnitt (40) angeordnet ist,
wobei die Nesteinführvorrichtung (50) umfasst:
einen Einführabschnitt (51), der dazu ausgestaltet ist, das zumindest eine Tub (3) in einer Einführposition zu positionieren, und
eine Einführvorrichtung (52), die dazu ausgestaltet ist, das Nest (2) in ein Tub (3), welches sich in der Einführposition befindet, einzuführen.

14. Nesthandhabungssystem (100) gemäß Anspruch 13, wobei die Nestentnahmevorrichtung (1) und die Nesteinführvorrichtung (50) so miteinander verbunden sind, dass die durch die Nestentnahmevorrichtung (1) entnommenen Nester den Tubs (3) der Nesteinführvorrichtung (50) wieder zugeführt werden können.

15. Verfahren zum Handhaben eines Nests (2) und eines Tubs (3), umfassend:
Zufördern zumindest eines Tubs (3), in welchem ein Nest (2) aufgenommen ist, in einer Förderrichtung (R1),
Positionieren des zumindest einen Tubs (3) in einer Entnahmeposition,
Entnehmen des Nests (2) aus dem Tub (3), welches sich in der Entnahmeposition befindet, und
Abfördern des Tubs (3),
wobei das Positionieren mit einem ersten Stopper (21) durchgeführt wird, um das Tub (3) in der Entnahmeposition zu positionieren.
